(19) Europäisches Patentamt
European Patent Office
Office européen des brevets

(11) Veröffentlichungsnummer: **0 090 282**
**B1**

# (12) EUROPÄISCHE PATENTSCHRIFT

(45) Veröffentlichungstag der Patentschrift: **05.02.86**

(51) Int. Cl.⁴: **C 08 F 246/00**, C 09 K 19/38, C 09 K 19/42, C 09 K 19/54

(21) Anmeldenummer: **83102671.1**

(22) Anmeldetag: **18.03.83**

## (54) Polymere mit mesogenen Gruppen und Farbstoffresten in den Seitenketten.

(30) Priorität: **27.03.82 DE 3211400**

(43) Veröffentlichungstag der Anmeldung: **05.10.83 Patentblatt 83/40**

(45) Bekanntmachung des Hinweises auf die Patenterteilung: **05.02.86 Patentblatt 86/6**

(84) Benannte Vertragsstaaten: **CH DE FR GB LI**

(56) Entgegenhaltungen: **EP - A - 0 007 574**

(73) Patentinhaber: **BASF Aktiengesellschaft, Carl-Bosch-Strasse 38, D-6700 Ludwigshafen (DE)**

(72) Erfinder: **Ringsdorf, Helmut, Dr., Kehlweg 41, D-6500 Mainz (DE)**
Erfinder: **Portugall, Michael, Dr., Raiffeisenstrasse, D-6706 Wachenheim (DE)**
Erfinder: **Schmidt, Hans-Werner, Holzstrasse 18, D-6500 Mainz (DE)**
Erfinder: **Etzbach, Karl-Heinz, Dr., Bensheimer Ring 9a, D-6710 Frankenthal (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 090 282 B1

LIBER, STOCKHOLM 1986

**Beschreibung**

Die Erfindung betrifft Polymere, die über einen Spacer mindestens eine mesogene Gruppe und mindestens einen Rest eines pleochroitischen Farbstoffs an die Polymerkette gebunden enthalten.

Geeignete Polymere, die nematische, smektische oder cholesterische Phasen bilden können, sind z.B. aus den DE-OS 28 31 909 und 27 22 589 bekannt. Diese Polymeren enthalten jedoch keine an das Polymere gebundenen Farbstoffreste.

Die erfindungsgemäßen Polymeren mit mesogenen Gruppen und Farbstoffresten sind Copolymere, in denen die Polymerkette aus

a) mindestens einem Monomeren, das eine nematogene, eine chirale oder eine smektogen Gruppe trägt oder aus Gemischen von Monomeren, die eine nematogene Gruppe tragen, und solchen, die eine chirale Gruppe tragen, und

b) mindestens einem Monomeren, das den Rest eines pleochroitischen Farbstoffs trägt, aufgebaut ist, wobei die nematogenen, die chiralen und smektogene Gruppen entweder direkt oder wie die Farbstoffreste über einen Spacer an die polymerisierbare Gruppe gebunden sind und wobei das Polymere gleiche oder verschiedene mesogene Gruppen und gleiche oder verschiedene Farbstoffreste enthält.

Bevorzugt sind Polymere, die der allgemeinen Formel

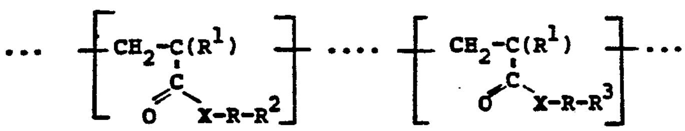

entsprechen, in der

$R^1$ Wasserstoff oder Methyl,

X -O- oder 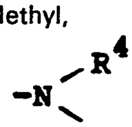,

R ein Spacer oder eine chemische Bindung,

$R^2$ eine mesogene Gruppe,

$R^3$ ein Rest eines pleochroitischen Farbstoffs und

$R^4$ Wasserstoff oder gegebenenfalls substituiertes Alkyl ist,

wobei die mesogene Gruppe auch Farbstoffeigenschaften aufweisen kann.

Die erfindungsgemäßen Polymere können zusammen mit niedermolekularen Flüssigkristallen oder Flüssigkristallmischungen in elektrooptischen Anzeigen verwendet werden. In Abhängigkeit von den Spacern und/oder den mesogenen Gruppen können die neuen Polymere auch flüssigkristalline Phasen bilden. Solche Polymere können allein in elektrooptischen Anzeigen verwendet werden.

Reste $R^4$ sind z.B: Benzyl, $C_1$- bis $C_4$-Alkyl, wie Ethyl, Propyl, Butyl, vorzugsweise Methyl und insbesondere Wasserstoff.

Als Spacer R kommen insbesondere Alkylengruppen mit 2 bis 12 C-Atomen in Betracht, die linear oder verzweigt und durch Sauerstoff, Schwefel und/oder 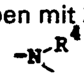 Gruppen unterbrochen sein können.

Einzelne Reste R sind beispielsweise:

$-(CH_2)_2-$, $-(CH_2)_3-$, $-(CH_2)_4-$, $-(CH_2)_5-$, $-(CH_2)_6-$, $-(CH_2)_8-$,
$-(CH_2)_{10}-$, $-(CH_2)_{12}-$, $-(CH_2)_2-O-(CH_2)_2-$,
$-(CH_2)_2-S-(CH_2)_2-$,

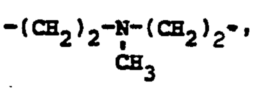, 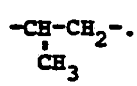.

Mesogene Gruppen $R^2$ sind in Kelker und Hatz, Handbook of Liquid Crystals, Verlag Chemie 1980, Seiten 87 bis 113 genannt.

Mesogene Gruppen $R^2$ sind vorzugsweise Reste der Formeln:

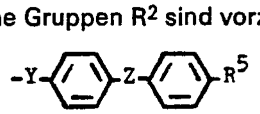 ,

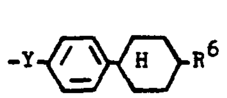 oder

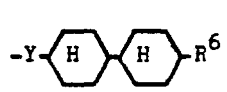 ,

wobei

Y 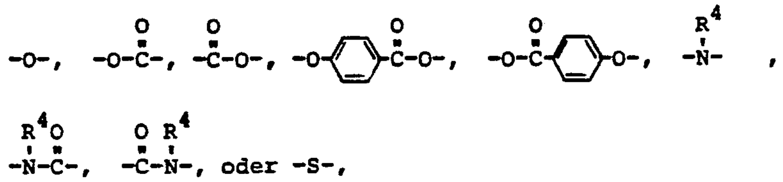

Z eine chemische Bindung oder ein Rest der Formel

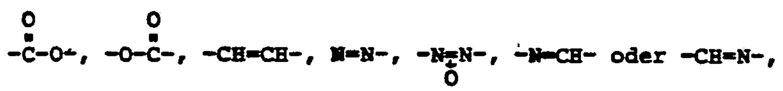

$R^5$ Wasserstoff, $C_1$- bis $C_{12}$-Alkyl, $C_5$- bis $C_7$-Cycloalkyl, $C_1$- bis $C_{12}$-Alkoxy, $C_1$- bis $C_{12}$-Alkoxycarbonyl, $C_1$- bis $C_{12}$-Alkanoyloxy, Fluor, Chlor, Brom, Cyan, Nitro und

$R^6$ Wasserstoff, $C_1$- bis $C_{12}$-Alkyl, $C_1$- bis $C_{12}$-Alkoxy oder $C_1$- bis $C_{12}$-Alkoxycarbonyl bedeuten.

Abhängig vom Rest Z können die mesogenen Gruppen der Formel

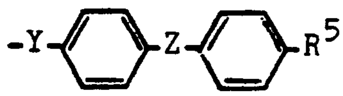

,

bereits Farbstoffeigenschaften besitzen, insbesondere wenn

Z -N=N-, -CH=CH-, -CH=N- oder 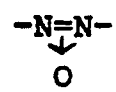 ist.

Farbstoffreste $R^3$ sind vorzugsweise über -O-, -S-, $-NR^4$ oder -S- an den Spacer gebunden, wobei diese Atome Teile einer Ether-, Ester-, Amin-, Imin-, Amid-, Imid- oder Mercaptangruppe sein können.

Für $R^3$ kommen alle pleochroitischen Farbstoffreste in Betracht, vorzugsweise solche, die sich auch als farbgebende Substanzen für niedermolekulare Flüssigkristalle oder Flüssigkristallmischungen eignen. Solche Farbstoffe sind z.B. in den DE-OS 26 27 215, 26 40 824, 30 34 249, 30 14 933 oder 29 02 177, von R.J. Cox in Mol. Cryst. Liq. Cryst. 55, 1-32 (1979) und von G.W. Gray in Chimia 34, 47 (1980) beschrieben.

Bevorzugt stammen die Farbstoffreste aus der Anthrachinon–, der Mono-, Bis- und Trisazo- und der Stilbenreihe. Besonders bevorzugt sind Farbstoffreste, die sich vom 1,4-Diaminoanthrachin-2,3-dicarbonimid und vom 1,4-Diamino–2-(oxdiazolyl-3')-anthrachinon ableiten.

Der Gehalt an Farbstoffresten in den Polymeren kann 0,1 bis 40, vorzugsweise 0,3 bis 30 Gew.%, bezogen auf das Polymere, betragen. Der Farbstoffgehalt wird photometrisch aus der Extinktion im Absorptionsmaximum bestimmt.

Zur Herstellung der erfindungsgemäßen Polymeren kann man z.B.

a) 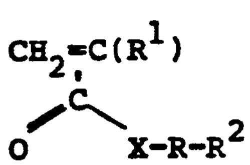 und 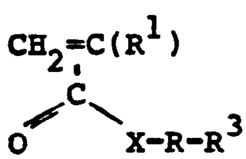

nach an sich bekannten Methoden copolymerisieren oder

b) in polymere Verbindungen der Formel

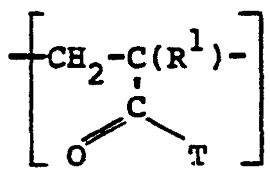,

in der
T ein austauschbarer Rest, z.B. Chlor oder niedermolekulares Alkoxy ist, den Rest -X-R-$R^2$ und X-R-$R^3$ durch Veresterung, Umesterung oder Amidierung nach an sich bekannten Methoden einführen (C.M. Paleos et al in J. Polym. Sci. Polym. Chem. Ed. 19, 1427 (1981).

Einzelheiten der Herstellung können den Beispielen entnommen werden.

Die Herstellungsmethoden für mesogene Gruppen tragende Polymere können der DE-OS 28 31 909 entnommen werden.

Die erfindungsgemäßen Polymere, die auch verschiedene Farbstoffe (z.B. eine Schwarzmischung) und verschiedene mesogene Gruppen enthalten können, können insbesondere zusammen mit niedermolekularen Flüssigkristallen oder Flüssigkristallmischungen in elektrooptischen Anzeigen eingesetzt werden. In diesen Mischungen können sowohl die flüssigkristallinen als auch die nicht flüssigkristallinen erfindungsgemäßen Polymere verwendet werden. Sie dienen hierbei als Lösungsvermittler für Farbstoffe, da für eine technische Realisierung von Farbstoffanzeigen nach dem Guest-Host-Prinzip die verwendeten Farbstoffe u.a. eine genügend hohe und möglichst temperaturunabhängige Löslichkeit in niedermolekularen Flüssigkristallen oder Flüssigkristallmischungen besitzen müssen.

Zum anderen bieten die erfindungsgemäßen Polymere die Möglichkeit der Optimierung niedermolekularer Flüssigkristalle oder Flüssigkristallmischungen. So kann z.B. das Phasenverhalten, die elastischen Konstanten und der Ordnungsgrad von niedermolekularen Flüssigkristallen oder Flüssigkristallmischungen auch durch Zusatz der erfindungsgemäßen Polymere verbessert werden.

Die erfindungsgemäßen Polymere, die flüssigkristalline Phasen bilden, können als solche in elektrooptische Anzeigen eingesetzt werden. Im elektrischen Feld zeigen diese flüssigkristallinen, farbstoffhaltigen Polymeren die gleichen elektrooptischen Effekte wie niedermolekulare Guest-Host-Systeme. Sie erlauben jedoch die Einstellung beliebig hoher Farbstoffkonzentrationen, da es aufgrund der kovalenten Fixierung der Farbstoffe zu keiner Entmischung kommen kann. Die für die elektrooptischen Effekte benötigten Temperaturen liegen bei diesen polymer-flüssig-kristallinen Systemen über Raumtemperatur; die Phasenübergangstemperaturen können jedoch durch Zusatz von niedermolekularen Flüssigkristallen gesenkt werden ('Weichmachereffekt').

Zudem bieten farbstoffhaltige, flüssigkristalline Polymere die Möglichkeit zur Informationsspeicherung in elektrooptischen Anzeigen, da durch Abkühlen des Polymers unter die Glastemperatur ein 'Einfrieren' der Phasen möglich ist.

Die im folgenden angegebenen Teile und Prozentangaben beziehen sich auf das Gewicht.

**A Synthese der mesogenen Monomere**

**Beispiel 1**

4-(6-Propenoyloxy)-hexyloxybenzoesäure-4'-cyanophenylester

a) 4-(8-Hydroxyhexyloxy)-benzoesäure

In einem 1 1 Dreihalskolben mit Rückflußkühler, Rührer und Tropftrichter werden 105 g 4-Hydroxybenzoesäure in 280 ml Ethanol gelöst. Durch Zugabe einer Lösung von 94 g Kaliumhydroxid in 120 ml Wasser entsteht das Dikaliumsalz der Säure. Nach Zugabe einer Spatelspitze KJ werden unter Rühren und Rückflußkochen 80 ml 6-Chlor-1-hexahol zugetropft. Die Reaktionsmischung wird über Nacht unter Rückfluß gekocht. Nach Beendigung der Reaktion wird das Reaktionsgemisch bis zur Trockne eingeengt. Der Rückstand wird in Wasser aufgenommen und mehrmals mit Ether extrahiert. Die Etherlösung wird mit halbkonzentrierter Salzsäuzre angesäuert, das ausfallende Produkt abgesaugt und mehrmals aus Ethanol umkristallisiert.

Ausbeute: 84,4 g (47 % d.Th.)

Schmp: 137°C

Elementaranalyse: ber: 65,53 % C, 7,61 % H

($C_{13}H_{18}O_4$) gef: 65,19 % C, 7,89 % H

b) 4-(8-Propenoyloxy) – hexyloxybenzoesäure

In einem Rundkolben mit Wasserabscheider werden 59,5 g 4-(6-Hydroxylhexyloxy)-benzoesäure, 10 g 4-Toluolsulfonsäure, 5 g Hydrochinon, 150 ml Acrylsäure und 150 ml Chloroform vorgelegt. Die Reaktionsmischung wird unter Rühren 15 Stunden unter Rückfluß gekocht. Nach dem Abkühlen wird sie in einen 3- bis 4-fachen Überschuß an Ether gegeben. Die etherische Lösung wird mehrmals mit warmem Wasser ausgeschüttelt und mit Natriumsulfat getrocknet. Die Lösung wird am Rotationsverdampfer auf die Hälfte des Volumens eingeengt und für 12 Stunden bei -20°C im Gefrierschrank belassen. Der Acrylsäureester scheidet sich dabei kristallin aus der Lösung ab und wird abgesaugt. Das Rohprodukt wird zur Reinigung aus Ethanol/Petrolether (1 : 2) umkristallisiert.

Ausbeute: 36,1 g (50 % d.Th.)
Schmp: k 88 n 96 i (k = kristallin, n = nematisch, i = isotrop)
Elementaranalyse: ber.: 65,75 % C, 6,85 % H
($C_{16}H_{20}0_5$) gef.: 68,0 % C, 6,90 % H

c) 4-(6-Propenyloxy)-hexyloxybenzoesäure-4'-cyanphenylester

29,2 g 4-(8-Propenoyloxy)-hexyloxybenzoesäure werden mit 80 ml Thionylchlorid 20 Minuten bei Raumtemperatur gerührt. Als Katalysator werden zwei Tropfen Dimethylformamid zugesetzt, und als Inhibitor dient eine Spatelspitze 2,8-Ditertiär-butyl—p-kresol. Das überschüssige Thionylchlorid wird zunächst an der Wasserstrahlpumpe und dann an der Olpumpe entfernt. Das zurückbleibende Säurechlorid löst man in 100 ml absolutem Tetrahydrofuran. In einem Dreihalskolben mit Tropftrichter, Rührer und Innenthermometer werden 12 g p-Cyanophenol und 20 ml Triethylamin in 100 ml absolutem Tetrahydrofuran vorgelegt. Unter Rühren und Kühlen wird die Säurechloridlösung langsam zugetropft, wobei die Temperatur 10°C nicht übersteigen soll. Danach läßt man über Nacht reagieren. Anschließend wird das Tetrahydrofuran vollständig abgezogen, der Rückstand in 200 ml Methylenchlorid gelöst, mehrmals mit Wasser ausgeschüttelt und mit Natriumsulfat getrocknet. Die Lösung des Benzoesäurephenylesters wird bis zur Trockne eingeengt und der Rückstand in möglichst wenig Methylenchlorid aufgenommen. Die Reinigung des Rohproduktes erfolgt durch Säulenchromatographie (Kieselgel). Als Laufmittel benutzt man ein Gemisch aus Petrolether und Essigsäureethylester (4 : 1). Das Produkt wird noch zweimal aus Ethanol umkristallisiert.

Ausbeute: 24,4 g (82 % d.Th.)
Schmp: 78-78°C
Elementaranalyse: ber.: 70,23 % C, 5,85 % H, 3,56 % N
($C_{20}H_{23}NO_5$) gef.: 89,79 % C, 5,88 % H, 3,87 % N

**Beispiel 2**

Trans,trans-4'-Methoxybicyclohexyl-4-acrylsäureester

a) Trans,trans-4,4'-Bicyclohexyldibenzoat

100 g 4,4'Dihydroxybiphenyl werden in 500 ml absolutem Ethanol gelöst und als Katalysator 3 Löffel Raney-Nickel zugegeben. Beide phenolische Ringe werden bei 200°C und 185 atm (Anfangsdruck; 110 atm) Wasserstoffdruck im Autoklaven hydriert. Nach 24 Stunden ist die Wasserstoffaufnahme beendet. Der Katalysator wird mit Hilfe einer Zentrifuge abgetrennt. Nachdem die ethano— lische Lösung bis zur Trockne eingeengt wurde, digeriert man den Rückstand in heißer 5 %iger Natronlauge, läßt auf Raumtemperatur abkühlen und saugt das ausfallende Isomerengemisch ab. Nach vollständigem Trocknen erhielt man 66 g (61 % d.Th.) Isomerenmischung. Die Trennung der Isomeren erfolgte über die Dibenzoate. In einem Dreihalskolben werden 40 g Isomerengemisch in 200 ml Dioxan und 120 ml Pyridin gelöst. In der Siedehitze tropft man 130 g Benzoylchlorid langsam zu und läßt den Reaktionsansatz über Nacht unter Rückfluß kochen. Anschließend wird das Lösungsmittel und die Hilfsbase unter Wasserstrahlvakuum aus der Reaktionsmischung entfernt. Man löst den Rückstand in einem Gemisch aus Benzol und Chloroform (1 : 1). Die Lösung wird mit warmer Natriumcarbonatlösung, verdünnter Salzsäure und Wasser ausgeschüttelt.

Nachdem die getrocknete Lösung um etwa 70 % eingeengt wurde, fällt beim Abkühlen das reine trans, trans-Isomere aus. Das Rohprodukt wurde abgesaugt, aus Benzol umkristallisiert und bei 80°C getrocknet.

Ausbeute: 22 g (27 % d.Th.)
Schmp.: 207°C
Elementaranalyse: ber.: 76,80 % C, 7,40 % H
($C_{26}H_{30}O_4$) gef.: 77,01 % C 7,20 % H

b) Trans,trans-4,4'-Bicyclohexyldiol

20 g trans,trans-4,4'-Bicyclohexyldibenzoat werden in 225 ml Methanol und 20 ml Wasser mit 12,5 g Kaliumhydroxid verseift. Die Reaktionsmischung wird 12 Stunden unter Rückfluß gekocht und anschließend mit 150 ml Wasser versetzt. Beim Konzentrieren der Lösung fällt das Diol aus, wird abgesaugt und zur Reinigung aus Essigsäureethylester umkristallisiert.

Ausbeute: 9,7 g (98 % d.Th.)
Schmp.: 213°C
Elementaranalyse: ber.: 72,72 % C, 11,20 % H
($C_{12}H_{22}0_2$) gef.: 72,34 % C, 11,43 % H

c) Trans,trans-4,4'-Bicyclohexyldiolmonobenzoat

Zu einer unter Rückfluß kochenden Lösung aus 20 g trans,trans-4,4'-Bicyclohexyldiol in 1500 ml Dioxan und 137 ml Pyridin tropft man eine Lösung aus 14 ml Benzoylchlorid in 140 ml Dioxan zu. Die Reaktionsmischung wird noch weitere zwei Stunden unter Rückfluß gekocht und anschließend der größte Teil des Lösungsmittels entfernt. Nach Zugabe von Wasser fällt ein organischer Rückstand aus, der abgesaugt wird. Der getrocknete Rückstand wird in 500 ml heißem Tetrachlorkohlenstoff digeriert, auf Raumtemperatur abgekühlt und filtriert. Auf dem Filter befindet sich das bei Raumtemperatur in $CCl_4$ unlösliche Diol. Das bis zur Trockne eingeengte Filtrat wird in 30°C warmem Metha— nol teilweise gelöst und bei Raumtemperatur filtriert. Dabei geht das Monobenzoat in Lösung und das Dibenzoat bleibt im Filter zurück. Die methanolische Lösung wird eingeengt und das Rohprodukt aus Essigsäureethylester/Petrolether (1 : 1) umkristallisiert.

Ausbeute: 8,9 g (29 % d.Th.)
Schmp.: 157°C
Elementaranalyse: ber.: 75,51 % C, 8,70 % H
($C_{19}H_{28}O_3$) gef.: 74,99 % C, 8,61 % H

d) Trans,trans-4'-Methoxybicyclohexyl-4-benzoesäureester

4,7 g Monobenzoat 2c) werden in 20 ml Methyljodid suspendiert. Zu der kochenden Lösung (Rückfluß) gibt man portionsweise jede Stunde jeweils 1 g Silber-(I)— -oxid (insgesamt 8 g $Ag_2O$). Die Reaktionsmischung wird weitere 2 Tage unter Rückfluß gekocht. Anschließend entfernt man durch Destillation das überschüssige Methyljodid, verdünnt mit 80 ml Chloroform und saugt den Katalysator ab. Nach Trocknen mit Natriumsulfat wird die Lösung eingeengt und durch Säulenchromatographie am System Kieselgel/Methylenchlorid gereinigt.

Ausbeute: 3,1 g (83 % d.Th.)
Schmp.: 105°C
Elementaranalyse: ber.: 75,92 % C, 8,92 % H
($C_{20}H_{28}O_3$) gef.: 75,74 % C, 9,01 % H

e) Trans,trans-4'-Methoxybicyclohexyl-4-ol

Zur Verseifung des Esters werden 3 g Benzosesaureester 2d) mit 75 ml Methanol, 10 ml Wasser und 3 g Kaliumhydroxid 12 Stunden unter Rückfluß gekocht. Die methanolische Lösung wird eingeengt, mit 80 ml Wasser versetzt, der ausgefallene Rückstand abgesaugt und mehrmals mit Wasser nachgewaschen. Zur Reinigung des Rohproduktes kristallisiert man mit niedrig siedendem Petrolether um.

Ausbeute: 2,0 g (95 % d.Th.)
Schmp.: 79°C
Elementaranalyse: ber.: 73,54 % C, 11,57 % H
($C_{13}H_{24}O_2$) gef.: 73,39 % C, 11,48 % H

f) Trans,trans-4'-Methoxybicyclohexyl—4-acrylsäureester

1 Teil trans,trans-4'-Methoxybicyclohexyl-4-ol werden in 10 ml Methylenchlorid gelöst und 1 g Triethylamin und eine Spatelspitze 4-Dimethylaminopyridin zugesetzt. Zu dieser Lösung läßt man 0,9 g Acrylsäure— chlorid in 5 ml Methylenchlorid unter Rühren bei Raumtemperatur zutropfen. Nach 24 Stunden wird mit Methylenchlorid verdünnt und die Lösung auf 100 ml Eiswasser gegeben. Die organische Phase wird zweimal mit Wasser gewaschen und über Natriumsulfat getrocknet. Nach Einengen der Lösung wird das Rohprodukt säulenchromatographisch (Kieselgel/Methylenchlorid) gereinigt.

Ausbeute: 0,7 g (53 % d.Th.)
Schmp.: 45°C
Elementaranalyse: ber.: 72,17 % C, 9,84 % H
($C_{18}H_{28}O_3$) gef.: 72,58 % C, 9,75 % H

**Beispiel 3**

4'-Methoxyphenylcyclohexyl-4-transacrylsäureester

2 Teile trans-4(4'-Methoxyphenyl)-cyclohexanol wurden unter gleichen Bedingungen, wie in Beispiel 2f) beschrieben, umgesetzt.

Ausbeute: 1,3 g (50 % d.Th.)
Schmelzpunkt: 58°C
Elementaranalyse: ber.: 73,82 % C, 7,74 % H
($C_{18}H_{20}O_3$) gef.: 73,95 % C, 7,81 % H

**B Synthese der Farbstoffmonomere**

**Beispiel 4**

4-(8-Propenoyloxy)-hexyloxy-4'-cyanoazobenzol

a) 4-(8-Hydroxyhexyloxy)-4'-cyanoazobenzol 22,3 g 4'-Cyano-4-hydroxyazobenzol und 14 g getrocknetes Kaliumcarbonat werden in 100 ml absolutem Aceton gelöst. Nach Zugabe einer Spatelspitze KJ werden 15,3 g 8-Chlor-1-hexanol in der Siedehitze zugetropft. Die Reaktionsmischung wird 6 Tage unter Rückfluß gekocht. Das

ausgefallene Kaliumchlorid wird warm abgesaugt und die Lösung eingeengt. Der erhaltene Farbstoff wird mit 200 ml $CHCl_3$ versetzt und die ungelösten Bestandteile abgesaugt. Die Chloroformlösung wird viermal mit $H_2O$ ausgeschüttelt und eingeengt. Das Rohprodukt wird aus 300 ml Aceton umkristallisiert.

Ausbeute: 15,3 g (47 % d.Th.)
Schmelzpunkt: 147°C
Elementaranalyse:
ber.: 89,71 % C, 8,47 % H, 12,83 % N
($C_{19}H_{21}N_3O_2$) gef.: 70,38 % C, 6,24 % H, 13,20 % N

b) 4-(8-Propenoyloxy)-hexyloxy-4'-cyanoazobenzol 6,5 g 4-(8-Hydroxyhexyloxy)–4'-cyanoazobenzol werden bei 80°C in 30 ml absolutem Tetrahydrofuran gelöst. Nach Zugabe von 3,1 ml Triethylamin wird eine Lösung von 1,8 ml Acrylsäurechlorid in 5 ml Tetrahydrofuran bei 80°C zugetropft. Die Reaktionsmischung wird abgekühlt und 20 Stunden bei Raumtemperatur gerührt. Nach Zugabe von 150 ml Chloroform wird die Lösung mit $H_2O$ ausgeschüttelt und über $Na_2SO_4$ getrocknet. Das Rohprodukt wird aus 350 ml Ethanol/Aceton (6:1) umkristallisiert.

Ausbeute: 4,5 g (80 % d.Th.)
Schmelzpunkt: 93°C; $\lambda_{max}$ 388 nm ($CHCl_3$).
Elementaranalyse:
ber.: 70,01 % C, 8,14 % H, 11,13 % N
($C_{22}H_{23}N_3O_3$) gef.: 69,94 % C, 8,34 % H, 11,14 % N

**Beispiel 5**

1,4-Diaminoanthrachinon-2,3-dicarbonsäure-N-(8-propenoyl-oxyhexyl)-imid

a) 1,4-Diaminoanthrachinon-2,3-dicarbonsäure-N-(6-hydroxyhexyl)-imid

In ein auf 100°C erhitztes Gem-isch aus 9,2 g 1,4-Diaminoanthrachinon–2,3-dicarbonsäureimid, 1,8 g Natriummethylat und 50 g Dimethylformamid trägt man 4,9 g 8-Chlor-1-hexanol ein, erhitzt das Gemisch 3 Stunden auf 100°C, läßt es abkühlen und fällt es auf 300 g Wasser. Das abgeschiedene Produkt wird abgesaugt, mit Wasser gewaschen, getrocknet und danach aus 1,1,2-Trichlorethan umkristallisiert.

Ausbeute: 7,1 g (58 % d.Th.)
Schmelzpunkt: 203-205°C.

b) 1,4-Diaminoanthrachinon-2,3-dicarbonsäure-N-(8-propenoyloxyhexyl)-imid

Zu einer auf 90°C erhitzten Lösung von 3,1 g 5a) in 50 ml absolutem Dioxan werden 0,88 g Triethylamin und anschließend 0,77 g Acrylsäurechlorid gegeben und die Mischung eine halbe Stunde auf 90°C erhitzt. Nach dem Abkühlen fällt man die Mischung auf 200 ml Wasser, saugt das Produkt ab, wäscht es mit Wasser und trocknet es. Die Reinigung der Rohware erfolgt durch Umkristallisation aus Toluol.

Ausbeute: 1,8 g (51 % d.Th.)
Schmelzpunkt: 153-154°C; $\lambda_{max}$ 872 nm ($CH_2Cl_2$).

Analog den Angaben in den Beispielen 4 und 5 werden die Farbstoffmonomere der Beispiele 8 bis 12 erhalten. Analog den Angaben in Beispiel 1c erhält man die Farbstoffmonomere der Beispiele 13 bis 15:

**Beispiel 6**

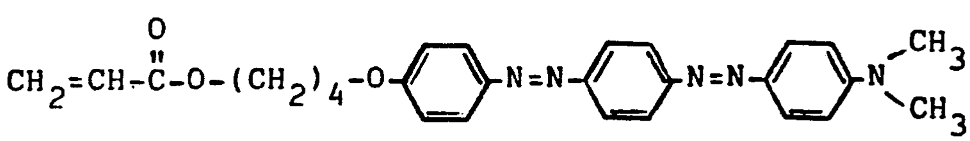

gelb

$\lambda_{max}$ 476 nm ($CH_2Cl_2$)

**Beispiel 7**

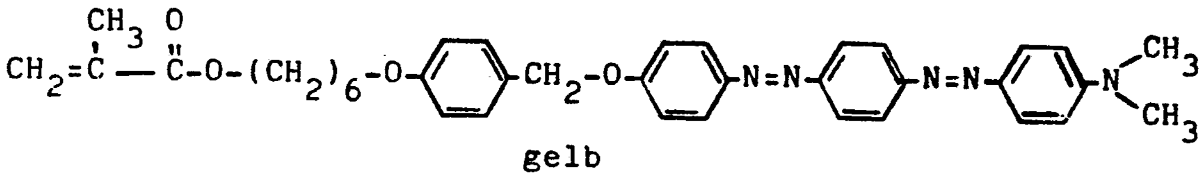

gelb

$\lambda_{max}$ 480 nm ($CH_2Cl_2$)

**Beispiel 8**

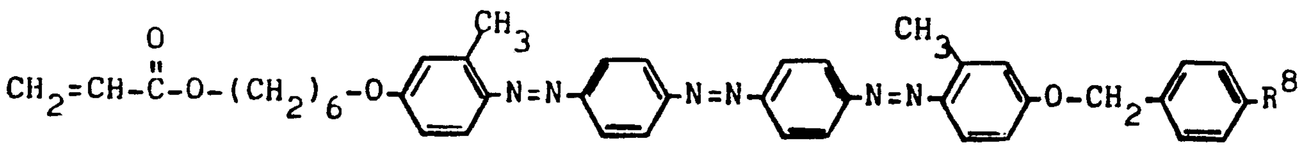

| $R^8$ | $\lambda_{max}$ (in $CH_2Cl_2$) |
|---|---|
| a) -H | 415 nm |
| b) $-(CH_2)_3-CH_3$ | 415 nm |
| c) $-C(CH_3)_3$ | 414 nm |
| d) 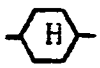 $-(CH_2)_3-CH_3$ | 413 nm |

**Beispiel 9**

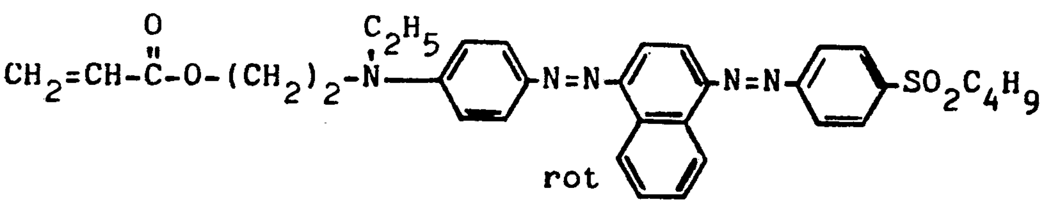

rot

**Beispiel 10**

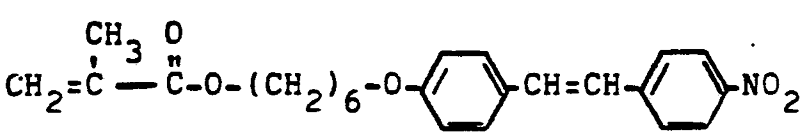

gelb

**Beispiel 11**

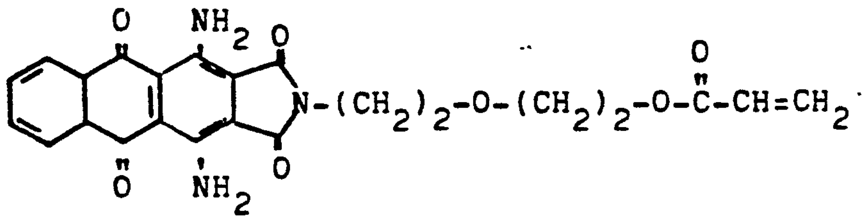

blau

$\lambda_{max}$ 669 nm ($CH_2Cl_2$)

**Beispiel 12**

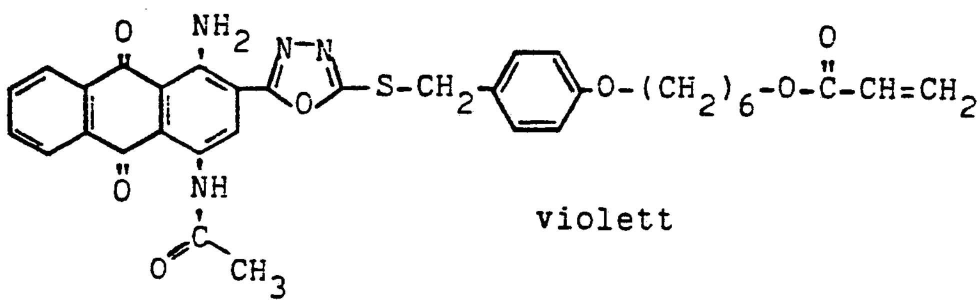

violett

**Beispiel 13**

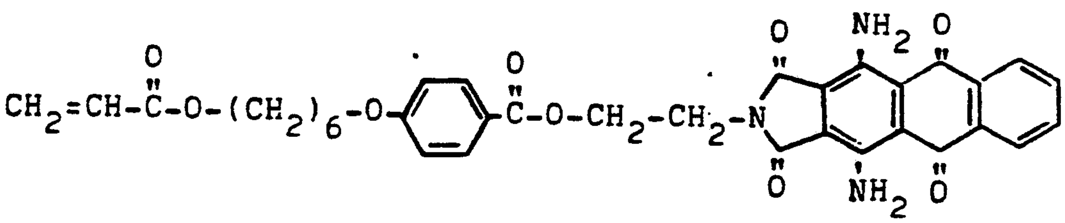

blau

max 670 nm ($CH_2Cl_2$)

**Beispiel 14**

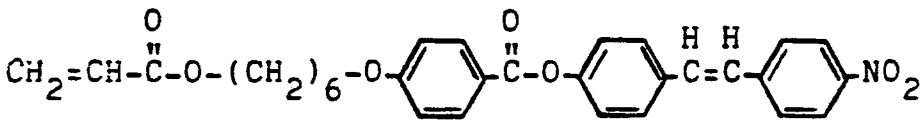

gelb

**Beispiel 15**

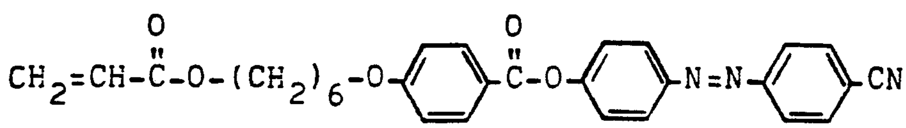

gelb

**C Synthese der erfindungsgemäßen Polymeren:**

Die in den Beispielen 1 bis 3 und 4 bis 15 beschriebenen Monomeren werden in isotroper Lösung nach der folgenden allgemeinen Vorschrift radikalisch copolymerisiert:

In einem Schlenkgefäß wird etwa 1 g Monomermischung in 8 ml absolutem Tetrahydrofuran oder Toluol gelöst und mit 1 mo1% AIBN (bezogen auf das Monomere) versetzt. Die Monomerlösung wird durch 10—minütiges Hindurchleiten von Stickstoff entgast und im Thermostaten polymerisiert. Die entstandenen Polymeren werden mit kaltem Ether ausgefällt, in Methylenchlorid gelöst und erneut gefällt. Dieser Vorgang wird solange wiederholt, bis im Dünnschichtchromatogramm kein Monomer mehr zu erkennen ist. Das gereinigte Polymer wird im Ölpumpenvakuum bei 30 bis 40°C getrocknet.

Die quantitative Bestimmung der Zusammensetzung der Copolymere erfolgte über UV—Spektroskopie und Elementaranalyse.

Das optische Verhalten der flüssigkristallinen Copolymere wurde mit einem Polarisationsmikroskop der Firma Leitz, Modell Ortholux II Pol-BK, bestimmt. Die Proben wurden zwischen einem Objektträger und einem Deckglas präpariert und mit Hilfe eines Heiztisches der Firma Mettler, Modell FP 52, temperiert.

Die differentialkalorimetrischen Untersuchungen der erfindungsgemäßen Polymere wurden an einem Gerät der Firma Perkin Elmer, Modell DSC 2c, durchgeführt. Die Substanzen (1-3 mg) wurden dabei in kleine Aluminiumpfännchen einge— wogen und mit einem Deckel verschlossen. Vor der eigentlichen Messung wurde die Probe über den Schmelz- bzw. Klärpunkt aufgeheizt. Die Heizrate betrug in allen Fällen 10°C pro Minute. Die Auswertung der Meßdaten erfolgte mit Hilfe eines Rechners der Firma Dietz, Modell Micro 821. Die zugehörige Software wurde im Arbeitskreis von Prof. Kosfeld (Aachen/Duisburg) entwickelt.

**Beispiel 16**

Das Copolymer aus 4-(8–Propenoyloxy)-hexyloxybenzoesäure-4'-cyanophenylester (Beispiel 1) und 4-(8-Propenoyloxy)-hexyloxy-4'–cyanoazobenzol (Beispiel 4) wurde nach der allgemeinen Vorschrift hergestellt, wobei der Anteil des Farbstoffmonomers variiert wurde. Die erhaltenen und gereinigten Polymere zeigten typisch nematisches Verhalten und bildeten nach 1- bis 2-stündigem Tempern kurz unterhalb des Klärpunktes eine charakteristische, nematische Schlierentextur aus.

In Tabelle 1 sind die Ergebnisse der polarisationsmikroskopischen und differentialkalorimetrischen Untersuchungen, sowie die Zusammensetzung der Copolymere zusammengefaßt (g: glasig, n: nematisch, i: isotrop).

**Tabelle 1**

| Beispiel | Farbstoffgehalt (Gew.%) | Phasenübergänge (°C) |
|---|---|---|
| 16a | 6 | g 31 n 130 i |
| 16b | 10 | g 34 n 129 i |
| 16c | 14 | g 33 n 129 i |
| 16d | 19 | g 34 n 130 i |
| 16e | 40 | g 32 n 132 i |

Figur 1 zeigt das differentialkalorimetrische Verhalten für das Copolymer 16c (Heizrate 10°C/min) ($T_1$: Glaspunkt $T_2$: Klärpunkt).

Figur 2 zeigt das Schaltverhalten des homogen orientierten Copolymers 18e) mit einem Polarisator bei 115°C, 30 V, 50 Hz und einem Zellabstand von 12µm. ($I_R$ = relative Lichtintensität).

**Beispiel 17**

a) Copolymere 18a) bis 18e) sind z.B. mit niedermolekularen Flüssigkristallen wie dem nematischen 4-n-Heptylbenzoesäure-4'-cyanphenylester (s. 17b) homogen mischbar. Die beiden Mischungskomponenten wurden in ein Schmappdeckelgläschen eingewogen und in Methylenchlorid gelöst. Nach Abdunsten des Lösungsmittels wurde die Mischung im Ölpumpenvakuum vollständig getrocknet und anschließend ein bis zwei Stunden oberhalb des Klärpunktes getempert.

In Tabelle 2 ist das differentialkalorimetrische und polarisationsmikroskopisch bestimmte Phasenverhalten einer Mischung aus 26 Gew.% niedermolekularer Komponente (b) und 74 Gew.% Copolymer (Beispiel 18e) und das des reinen Copolymers aus 16e) zusammengefaßt.

**Tabelle 2**

| Beispiel | Zusammen-setzung ($X_{II}$) | Farbstoff-gehalt (Gew.%) | Phasen-übergänge |
|---|---|---|---|
| 16e) | 0 | 40 | g 32 n 132; |
| 17a) | 0,26 | 30 | g-2 n 103; |

$$X_{II} = \frac{m_{II}}{m_{II}+m_I}$$ , $m_I$ Masse Bsp. 16e), $m_{II}$ Masse Bsp. 17b).

In Tabelle 3 sind die Anschaltzeiten von homogen vororientiertem Copolymer 18e) und die der Mischung Beispiel 17a) bei 10 V, 20 V und 30 V, 50 Hz, einer Zelldecke von 12µm und einem Polarisator aufgeführt.

Tabelle 3

| Beispiel | Spannung (V) | Temp. | Anschaltzeit (s) 90 % J |
|---|---|---|---|
| 16e) | 30 | 115 | 1,2 |
| 17a) | 30 | 81 | 0,8 |
| 16e) | 20 | 115 | 2,3 |
| 17a) | 20 | 81 | 1,3 |
| 16e) | 10 | 115 | 6,0 |
| 17a) | 10 | 81 | 2,0 |

**b) 4-n-Heptylbenzoesäure-4'-cyanophenylester**

Zu einer Lösung von 2,5 g p-Cyanophenol in 20 Raumteilen abs. Tetrahydrofuran und 4 ml Triethylamin werden 5 g p-n-Heptylbenzoesäure in 20 ml abs. THF bei Raumtemperatur langsam zugetropft. Nach 3 Stunden löst man das Reaktionsgemisch in 100 ml Chloroform/ Methylenchlorid (1:1) und schüttelt mehrmals mit Wasser aus. Die organische Phase wird über Natriumsulfat getrocknet und eingeengt. Zur Reinigung kristallisiert man das Rohprodukt aus Ethanol um.

Ausbeute: 4,3 g (82 % d. Th.)

Phasenverhalten: k 44 n 55 i

Elementaranalyse: ber.: 78,48 % C, 7,21 % H, 4,36 % N

($C_{21}H_{23}NO_2$) gef.: 78,32 % C, 7,28 % H, 4,30 % N

Durch Einmischen einer niedermolekularen nematischen Verbindung (Bsp. 17b) in ein erfindungsgemäßes, nematisches Copolymer (Bsp. 18e) können die Eigenschaften sowohl der niedermolekularen als auch der polymeren Komponente verbessert werden. Beim nematischen Copolymer werden die Phasenübergangstemperaturen gesenkt und durch die geringere Viskosität der Mischung schnellere Schaltzeiten erzielt. Umgekehrt hemmt der polymere Flüssigkristall die Kristallisation der niedermolekularen Komponente.

**Beispiel 18**

Nach der allgemeinen Vorschrift wurden Copolymere aus 4-(8'-Propenoyloxy)-hexyloxybenzoesäure-4'-cyanphenylester (s. Beispiel 1) und 1,4-Diaminoanthrachinon—2,3-dicarbonsäure-N-(8'-propenoyloxyhexyl)-imid (s. Beispiel 5) hergestellt, wobei das Verhältnis der Monomeren variiert wurde. Lösungsmittel: Dioxan; Polymerisationsdauer 46 h bei 70°C.

In der Tabelle 4 sind die Ergebnisse der polarisationsmikroskopischen und differentialkalorimetrischen Untersuchungen sowie die Zusammensetzung der Copolymere (Farbstoffgehalt) zusammengestellt.

Tabelle 4

| Beispiel | Farbstoffgehalt (Gew.%) | Phasenübergänge (°C) |
|---|---|---|
| 18a | 6 | g 31 n 112 |
| 18b | 5 | g 32 n 119 |
| 18c | 15 | g 34 n 102 |
| 18d | 19 | g 42 n 105 |
| 18e | 30 | g 50 n 91 |
| 18f | 39 | g 63 |

**Beispiel 19**

Analog Beispiel 17a wurden homogene Mischungen der Copolymere 18a, 18c, 18d und 18e mit niedermolekularen Flüssigkristallen (binäre Mischung, bestehend aus 80 Mol% 17b und 40 Mol% 4-n-Pentylbenzoesäure-4'-cyanphenylester, der analog Beispiel 17b synthetisiert wurde) hergestellt.
In der Tabelle 5 sind der Copolymeranteil und der daraus resultierende Farbstoffgehalt der einzelnen Mischungen sowie deren Klärpunkte zusammengefaßt.

**Tabelle 5**

| Mischung | Gehalt der Mischung an Copolymer Nr. | (Gew.%) | Farbstoffe (Gew.%) | Phase | Klärpunkt (°C) |
|---|---|---|---|---|---|
| 19a | 18a) | 13,4 | 0,8 | n | 60 |
| 19b | 18c) | 9,9 | 1,5 | n | 59 |
| 19c | 18d) | 7,9 | 1,5 | n | 58 |
| 19d | 18e) | 5,1 | 1,5 | n | 57 |

**Patentansprüche**

1. Polymere mit mesogenen Gruppen und Farbstoffresten, dadurch gekennzeichnet, daß die Polymerkette aus a) mindestens einem Monomeren, das eine nematogene, eine chirale oder eine smektogene Gruppe trägt oder aus Gemischen von Monomeren, die eine nematogene und solchen, die eine chirale Gruppe tragen und b) mindestens einem Monomeren, das den Rest eines pleochroitischen Farbstoffs trägt, aufgebaut ist, wobei die nematogenen, die chiralen und smektogene Gruppen entweder direkt oder wie die Farbstoffreste über einen Spacer an die polymerisierbare Gruppe gebunden sind.

2. Polymere gemäß Anspruch 1, gekennzeichnet durch die allgemeinen Formel

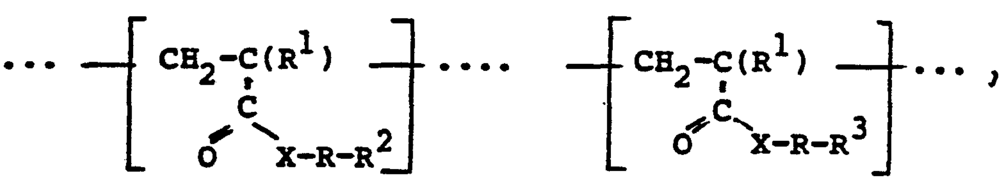

in der
$R^1$ Wasserstoff oder Methyl,
X -O- oder 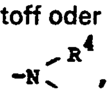 ,

R ein Spacer oder eine chemische Bindung,
$R^2$ eine mesogene Gruppe,
$R^3$ ein Farbstoffrest und
$R^4$ Wasserstoff oder gegebenenfalls substituiertes $C_1$- bis $C_4$-Alkyl ist,
und wobei die mesogene Gruppe auch Farbstoffeigenschaften aufweisen kann.

3. Polymere gemäß Anspruch 1 oder 2, dadurch gekennzeichnet, daß R für eine chemische Bindung oder für lineares oder verzweigtes $C_2$- bis $C_{12}$-Alkylen steht,

wobei die Alkylenkette durch -O-, -S- oder $-\overset{R^4}{N}-$ unterbrochen sein kann.

4. Polymer gemäß Anspruch 1 oder 2, dadurch gekennzeich- net, daß R für $-(CH_2)_2-$, $-(CH_2)_3-$, $-(CH_2)_4-$, $-(CH_2)_5-$, $-(CH_2)_6-$, $-(CH_2)_8-$, $-(CH_2)_{10}-$, $-(CH_2)_{12}-$, $-(CH_2)_2O-(CH_2)_2-$, $-(CH_2)_2S-(CH_2)_2-$, $-(CH_2)_2\underset{CH_3}{N}-(CH_2)_2$ oder $-\underset{CH_3}{CH}-CH_2-$.

5. Polymer gemäß Anspruch 1, 2, 3 oder 4, dadurch gekenn- zeichnet, daß $R^2$ für Reste der Formeln

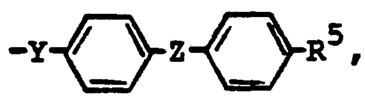, 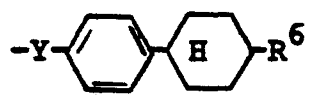 oder

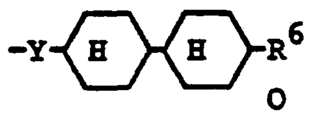 stehen, worin

Y 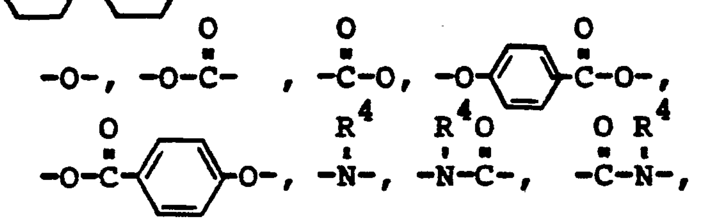

oder -S-,

Z eine chemische Bindung, $-\overset{O}{C}-O-$, $-O-\overset{O}{C}-$, $-CH=CH-$, $-N=N-$, $-\underset{O}{N}=N-$, $-N=CH-$ oder $-CH=N-$,

$R^5$ Wasserstoff, $C_1$- bis $C_{12}$-Alkyl, $C_5$- bis $C_7$-Cycloalkyl, $C_1$- bis $C_{12}$-Alkoxy, $C_1$- bis $C_{12}$-Alkoxycarbonyl, $C_2$- bis $C_{12}$-Alkanoyloxy, Fluor, Chlor, Brom, Cyan, Nitro und $R^6$ Wasserstoff, $C_1$- bis $C_{12}$-Alkyl, $C_1$- bis $C_{12}$-Alkoxy oder $C_1$- bis $C_{12}$-Alkoxycarbonyl bedeuten.

6. Polymer gemäß Anspruch 1, 2, 3, 4 oder 5, dadurch gekennzeichnet, daß $R^3$ für den Rest eines pleochroitischen Farbstoffs aus der Gruppe der Anthrachinon-, der Stilben-, der Monoazo-, der Bisazo- oder der Trisazofarbstoffe ist, wobei der Farbstoffrest über

$-O-$, $-\overset{R^4}{N}-$, $-\overset{O}{C}-O$, $-O-\overset{O}{C}-$, $-\overset{O}{C}-\overset{R^4}{N}-$, $-\overset{R^4}{N}-\overset{O}{C}-$

oder -S- an den Spacer R gebunden ist.

7. Polymer gemäß Anspruch 1 bis 8, dadurch gekennzeich- net, daß das Polymere 0,1 bis 40 Gew.%, bezogen auf das Polymere, Farbstoffreste enthält.

8. Verwendung der Polymeren gemäß den Ansprüchen 1 bis 7 für elektrooptische Anzeigen.

## Claims

1. A polymer containing mesogenic groups and dye radicals, wherein the polymer chain comprises a) one or more monomers possessing a nematogenic, a chiral or a smectogenic group, or a mixture of monomers possessing a nematogenic group with those possessing a chiral group, an b) one or more monomers possessing a radical of a pleochroic dye, and the nematogenic, the chiral and the smectogenic groups are bonded to the

polymerizable group either directly or, like the dye radicals, via a spacer.

2. A polymer as claimed in claim 1, of the general formula

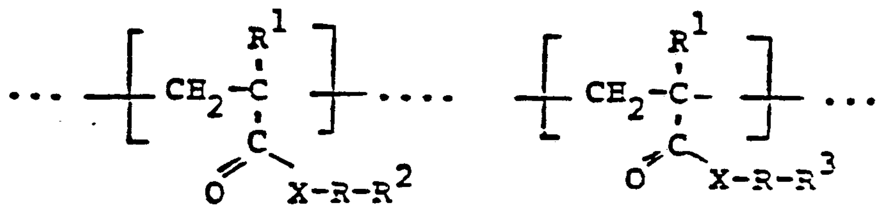

where $R^1$ is hydrogen or methyl, X is -0- or

FIG36/10

is a spacer or a chemical bond, $R^2$ is a mesogenic group, $R^3$ is a dye radical and $R^4$ is hydrogen or unsubstituted or substituted $C_1$-$C_4$-alkyl, and the mesogenic group may also possess dye properties.

3. A polymer as claimed in claim 1 or 2, wherein R is a chemical bond or linear or branched $C_2$-$C_{12}$-alkylene which may or may not be interrupted by -O-, -S- or $-N{<}R^4$, R

4. A polymer as claimed in claim 1 or 2, wherein R is

$-(CH_2)_2$, $-(CH_2)_3$, $-(CH_2)_4$, $-(CH_2)_5$, $-(CH_2)_6$, $-(CH_2)_8$, $-(CH_2)_{10}$, $-(CH_2)_{12}$, $-(CH_2)_2O-(CH_2)_2$, $-(CH_2)_2S-(CH_2)_2$, $-(CH_2)_2N(CH_3)-(CH_2)_2$ or $-CH(CH_3)-CH_2-$.

5. A polymer as claimed in claim 1, 2, 3 or 4, wherein $R^2$ is a radical of the formula

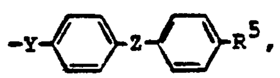, 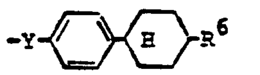 or

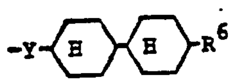

where Y is -O-, -O-, $-O-\overset{O}{\overset{\|}{C}}-$, $-\overset{O}{\overset{\|}{C}}-O$, 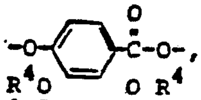, 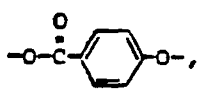, $-\overset{R^4}{N}-$, $-\overset{R^4}{N}-\overset{O}{\overset{\|}{C}}-$, $-\overset{O}{\overset{\|}{C}}-\overset{R^4}{N}-$,

or -S-,

Z is a chemical bond, $-\overset{O}{\overset{\|}{C}}-O-$, $-O-\overset{O}{\overset{\|}{C}}-$, -CH=CH-, -N=N-, $-\underset{O}{\underset{\downarrow}{N}}=N-$, -N=CH- or -CH=N-,

$R^5$ is hydrogen, $C_1$-$C_{12}$-alkyl, $C_5$-$C_7$-cycloalkyl, $C_1$-$C_{12}$-alkoxy, $C_1$-$C_{12}$-alkoxycarbonyl, $C_2$-$C_{12}$alkanoyloxy, fluorine, chlorine, bromine, cyano or nitro, and $R^6$ is hydrogen, $C_1$-$C_{12}$-alkyl, $C_1$-$C_{12}$-alkoxy or $C_1$-$C_{12}$-alkoxycarbonyl.

6. A polymer as claimed in claim 1, 2, 3, 4 or 5, wherein R is the radical of a pleochroic dye selected from the group consisting of the anthraquinone, the stilbene, the monoazo, the bisazo and the trisazo dyes, and the dye radical is bonded to the spacer R via

-O-, $-\overset{R^4}{N}-$, $-\overset{O}{\overset{\|}{C}}-O$, $-O-\overset{O}{\overset{\|}{C}}-$, $-\overset{O}{\overset{\|}{C}}-\overset{R^4}{N}-$, $-\overset{R^4}{N}-\overset{O}{\overset{\|}{C}}-$ or -S-.

7. A polymer as claimed in claims 1 to 6, wherein the polymer contains from 0.1 to 40 % by weight, based on the polymer, of dye radicals.

8.The use of a polymer as claimed in claims 1 to 7 for electrooptical displays.

**Revendications**

1. Polymères comportant des groupes mésogènes et des radicaux de colorants, caractérisés en ce que la chaîne polymère est constituée a) d'au moins un monomère qui porte un groupe nématogène, chiral ou smectogene ou de mélanges de monomères qui portent un groupe nématogène et de monomères qui portent un groupe chiral, et b) d'au moins un monomère qui porte le radical d'un colorant pléochroïque, les groupes nématogènes, chiraux et smectogènes étant liés au groupe polymérisable, soit directement, soit, comme le radical de colorant, par l'intermédiaire d'un groupe d'écartement.

2. Polymères selon la revendication 1, caractérisés par la formule générale

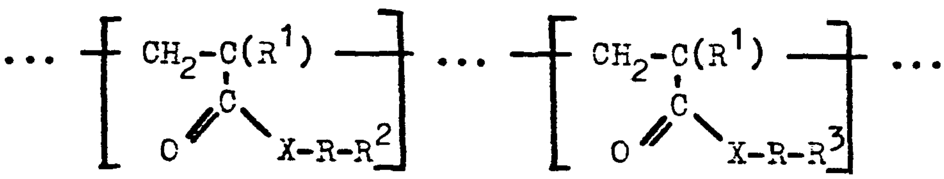

dans laquelle

$R^1$ est un atome d'hydrogène ou un radical méthyle,

X est mis pour -O- ou 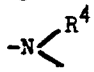

R est un groupe d'écartement ou une liaison chimique, $R^2$ est un groupe mésogène,

$R^3$ est un radical de colorant et

$R^4$ est un atome d'hydrogène ou un radical alkyle en $C_1$ à $C_4$ éventuellement substitue,

le groupe mesogene pouvant également présenter des caractéristiques de colorant.

3. Polymères selon la revendication 1 ou 2, caractérisés en ce que R est mis pour une liaison chimique ou pour un radical alkylène en $C_2$ à $C_{12}$ à chaîne lineaire ou ramifiée, 1 chaîne d'alkylène pouvant être interrompue par 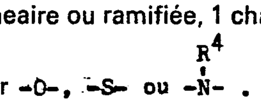 .

4. Polymère selon la revendication 1 ou 2, caractérisé en ce que R est mis pour $-(CH_2)_2$, $-(CH_2)_3$, $-(CH_2)_4$, $-(CH_2)_5$, $-(CH_2)_6$, $-(CH_2)_8$, $-(CH_2)_{10}$, $-(CH_2)_{12}$, $-(CH_2)_2O-(CH_2)_2$, $-(CH_2)_2S-(CH_2)_2$, 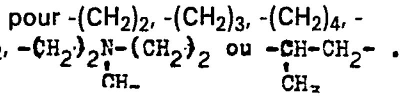 .

5. Polymère selon l'une quelconque des revendications 1 à 4, caractérisé en ce que $R^2$ est mis pour un radical de formule

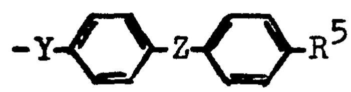 , 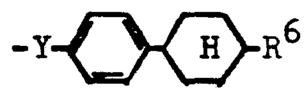 ou 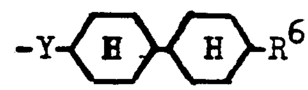

dans laquelle Y est mis pour -O-, 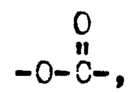 , 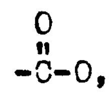 , 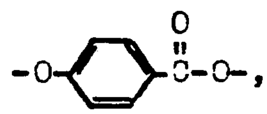 , 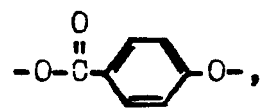 ,

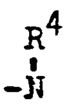 , 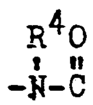 , 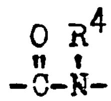 ou -S- et

Z pour une liaison chimique, 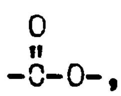 , 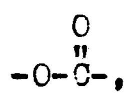 , -CH=CH-, -N=N-,

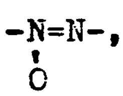 , -N=CH- ou -CH=N- ,

$R^5$ est un atome d'hydrogène, un radical alkyle en $C_1$ à $C_{12}$, cycloalkyle en $C_5$ à $C_7$, alcoxy en $C_1$ à $C_{12}$, alcoxycarbonyle en $C_1$ à $C_{12}$, alcanoyloxy en $C_2$ à $C_{12}$, un atome de fluor, de chlore, de brome, un groupe cyano, nitro et

$R^6$ est un atome d'hydrogène, un radical alkyle en $C_1$ à $C_{12}$, alcoxy en $C_1$ à $C_{12}$ ou alcoxycarbonyle en $C_1$ à $C_{12}$.

6. Polymère selon l'une quelconque des revendications 1 à 5, caractérisé en ce que $R^3$ est mis pour le radical d'un colorant pléochroïque du groupe des colorants anthraquinoniques, stilbéniques, monoazoïques, bisazoïques ou trisazoïques, le radical de colorant étant lié au groupe d'écartement R par l'intermédiaire de $-O-$, $-\overset{R^4}{\overset{|}{N}}-$, $-O-\overset{O}{\overset{\|}{C}}-$, $-\overset{O}{\overset{\|}{C}}-O-$, $-\overset{O}{\overset{\|}{C}}-\overset{R^4}{\overset{|}{N}}-$, $-\overset{R^4}{\overset{|}{N}}-\overset{O}{\overset{\|}{C}}-$ ou -S- .

7. Polymère selon l'une quelconque des revendications 1 à 6, caractérisé en ce qu'il contient 0,1 à 40 % en poids, par rapport au polymère, de radicaux de colorant.

8. Utilisation des polymères selon l'une quelconque des revendications 1 à 7 pour des dispositifs d'affichage électrooptiques.

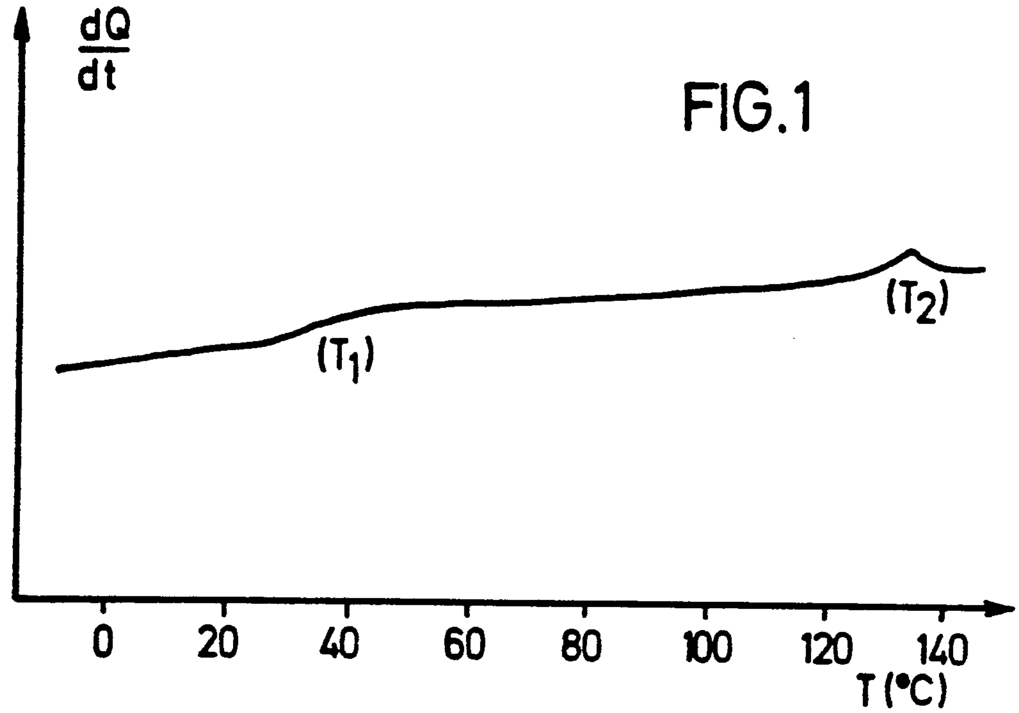
dQ/dt
(T1)
(T2)
0
20
40
60
80
100
120
140
T (°C)

FIG.1

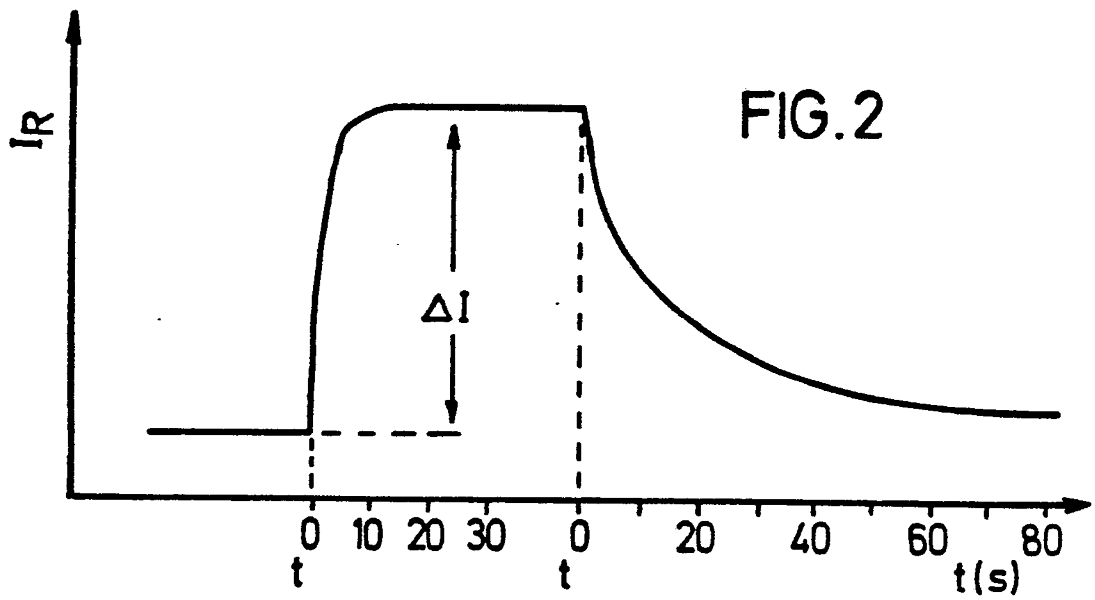
IR
ΔI
0
10
20
30
0
20
40
60
80
t
t
t (s)

FIG.2